# EUROPÄISCHE PATENTANMELDUNG

(11) **EP 2 292 914 A2**
(43) Veröffentlichungstag der Anmeldung: **09.03.2011**
(21) Anmeldenummer: 10172136.3
(22) Anmeldetag: 06.08.2010
(51) Int. Cl.: F02D 41/00, F02B 37/16, F02B 39/16

(54) **Vorrichtungsanordnung und Verfahren zur Steuerung eines Verdichterdrucks einer aufgeladenen Brennkraftmaschine mit Frischluftzuführeinrichtung**

(30) Priorität: 14.08.2009 DE 102009037639
(71) Anmelder: KNORR-BREMSE Systeme für Nutzfahrzeuge GmbH, 80809 München (DE)
(72) Erfinder: Marx, Manuel, 85258, Weichs (DE); Fritsch, Gerd, 81827, München (DE)
(74) Vertreter: Mattusch, Gundula

(57) **Zusammenfassung**

Eine Vorrichtungsanordnung (1) zur Steuerung eines Verdichterdrucks einer aufgeladenen Brennkraftmaschine (6), mit einer Frischluftzufüihreinrichtung (8), welche einen Auslass des Verdichters (11) mit der Brennkraftmaschine (6) verbindet, und einer Ladeeinrichtung (10), ist gekennzeichnet durch zumindest eine steuerbare Ventileinrichtung (14), durch welche bei Aktivierung derselben der Auslass des Verdichters (11) mit der Atmosphäre oder/und dem Einlass des Verdichters (11) zur Steuerung des Verdichterdrucks verbindbar ist, sowie ein entsprechendes Verfahren.

## Beschreibung

Die Erfindung betrifft eine Vorrichtungsanordnung nach dem Oberbegriff des Anspruchs 1 und ein Verfahren nach dem Oberbegriff des Anspruchs 14.

Aufgeladene Brennkraftmaschinen weisen üblicherweise einen Abgasturbolader auf und können zusätzlich mit einer Frischluftzuführeinrichtung versehen sein, welche bei Auftreten eines so genannten Turbolochs bei einer Drehmomentanforderung durch einen Fahrer Frischluft aus einem Druckluftspeicher in die Ansaugleitung der Brennkraftmaschine einblasen.

Die WO 2006/089779 beschreibt ein Beispiel einer Frischluftzuführung, bei welcher bei einer transienten Volllastanforderung beim Einblasen von Frischluft eine Klappe geschlossen wird, um ein Rückströmen der eingeblasenen Frischluft in den Verdichter des Abgasturboladers zu verhindern. Während des Einblasevorgangs und der geschlossenen Klappe kann eine so genannte Pumpgrenze des Verdichters des Turboladers erreicht werden, da der Verdichter verdichtete Luft gegen die geschlossene Klappe fördert. Dadurch ergibt sich ein immer kleiner werdender Massenstrom bei gleichzeitig ansteigendem Druckverhältnis. Bei einem Ottomotor kann dessen Drosselklappe zum Beispiel beim Schubbetrieb (Nulllast) geschlossen sein, wobei ein ähnliches Verhältnis auftreten kann.

Wird diese Pumpgrenze eines Turboladers erreicht, so entsteht durch Abreißen einer Strömung an den Schaufeln des Verdichterlaufrades das so genannte Pumpen in einem instabilen Bereich. Das Abreißen der Strömung tritt bei bestimmten Verhältnissen von Druckverhältnis und Massenstrom der verdichteten Luft auf und ist in so genannten Kennlinienfeldern bzw. Verdichterkennfeldern, die für jeden Verdichter bzw. Turboladeraufbau individuell sind. Das Pumpen kann hohe dynamische Belastungen der Schaufeln verursachen und zu Schäden bzw. zum Ausfall des Turboladers führen.

Die Aufgabe der vorliegenden Erfindung besteht daher darin, eine verbesserte Vorrichtungsanordnung und ein entsprechendes Verfahren zum Steuern eines Verdichterdrucks einer aufgeladenen Brennkraftmaschine bereitzustellen.

Die Aufgabe wird durch eine Vorrichtungsanordnung mit den Merkmalen des Anspruchs 1 gelöst. Die Aufgabe wird auch durch ein Verfahren mit den Merkmalen des Anspruchs 14 gelöst.

Erfindungsgemäß wird eine Vorrichtungsanordnung zur Steuerung eines Verdichterdrucks einer aufgeladenen Brennkraftmaschine geschaffen, mit einer Frischluftzuführeinrichtung, welche einen Auslass des Verdichters mit der Brennkraftmaschine verbindet, und eine Ladeeinrichtung bereitgestellt und gekennzeichnet ist durch zumindest eine steuerbare Ventileinrichtung, durch welche bei Aktivierung derselben der Auslass des Verdichters mit der Atmosphäre oder/und dem Einlass des Verdichters zur Steuerung des Verdichterdrucks verbindbar ist.

Ein erfindungsgemäßes Verfahren zum Steuern eines Verdichterdrucks einer aufgeladenen Brennkraftmaschine, mit einer Frischluftzuführeinrichtung, welche einen Auslass des Verdichters mit der Brennkraftmaschine verbindet, und einer Ladeeinrichtung, ist **dadurch gekennzeichnet, dass** zumindest eine steuerbare Ventileinrichtung bei Aktivierung den Auslass des Verdichters mit der Atmosphäre oder/und dem Einlass des Verdichters zur Steuerung des Verdichterdrucks verbindet.

Somit wird bei einer Frischluftzufuhr bei einer Drehmomentanforderung an die Brennkraftmaschine es ermöglicht, dass ein notwendiger Massenstrom des Turboladers abgeführt wird. Dieser Massenstrom kann als Abfuhrluftstrom ins Freie in die Atmosphäre oder/und wieder dem Verdichter zugeführt werden.

Dadurch ist es möglich, ein Pumpen der Ladeeinrichtung bei einem Einblasevorgang von Frischluft zu vermeiden und einen definierten und zeitlich stationären Druck am Verdichterlaufrad einzustellen. Eine Lagerbelastung des Verdichters in den transienten Phasen beim Einblasevorgang wird reduziert.

Die zumindest eine steuerbare Ventileinrichtung kann in einer Ausführung eine Betätigungseinrichtung aufweisen, welche eine Aktivierung bei Überschreiten eines vorgebbaren Verdichterdrucks und eine Desaktivierung bei Unterschreiten eines vorgebbaren Verdichterdrucks bewirkt. Dies kann zum Beispiel mechanisch ausgebildet sein, indem ein Druckfühler den Verdichterdruck stromaufwärts erfasst und über eine mechanische Hebelverstärkung ein Ventil öffnet. Ein Drucksollwert kann über eine Federvorspannkraft vorgegeben und ggf. einstellbar sein. Natürlich sind auch andere Aufbauten möglich.

In einer weiteren Ausführung kann die Betätigungseinrichtung als mechanischer Ventilantrieb als Hebelgetriebe ausgebildet sein, welches zur Zusammenwirkung mit einer Antriebseinheit der Frischluftzuführeinrichtung oder einer separaten Antriebseinheit vorgesehen ist. In einfachster Form ist das Hebelgetriebe als Stange eines Kurbeltriebs ausgeführt, wobei die Kurbelschwinge die Ventileinrichtung mit einem Klappenelement der Frischluftzuführeinrichtung koppelt. Somit kann die Ventileinrichtung jedes Mal öffnen, wenn die Frischluftzuführeinrichtung aktiviert wird, d.h. deren Klappenelement betätigt wird.

In einer alternativen Ausführung weist die zumindest eine Ventileinrichtung eine elektrische Betätigungseinrichtung auf. Ein Vorteil besteht darin, dass die Ventileinrichtung bedarfsorientiert aktivierbar ist, so zum Beispiel nur wenn der Verdichterdruck einen Grenzwert überschreitet und umgekehrt. Diese Aktivierung kann durch ein Steuergerät der Brennkraftmaschine vorgenommen werden, welches auch die Frischluftzuführung steuert. Weist die letztere ein eigenes Steuergerät auf, so kann dieses dafür benutzt werden. Es ist auch möglich, dass die zumindest eine Ventileinrichtung mit einer eigenen Steuereinrichtung versehen ist, wobei diese über einen Fahrzeugbus, z.B. CAN, die im Steuergerät vorhandenen aktuellen Druckmesswerte erhält.

In einer weiteren Ausführung ist vorgesehen, dass die elektrische Betätigungseinrichtung anhand zumindest eines Kennlinienfeldes des Verdichters der Ladeeinrichtung steuerbar ist, wobei das zumindest eine Kennlinienfeld in der Steuereinrichtung gespeichert ist. Es kann natürlich auch dezentral oder im Steuergerät der Brennkraftmaschine gespeichert sein. Sollte dann während eines Einblasevorgangs durch die Frischluftzuführeinrichtung die Pumpgrenze erreicht werden, kann die jeweilige Steuerung über ein entsprechendes Signal die zumindest eine Ventileinrichtung aufsteuern. Damit werden zum Einen unnötige Öffnungen, die bei mechanischer Öffnung durch Kopplung mit dem Klappenelement oder der oben beschriebenen Druckbetätigung zwangsläufig entstehen, vermieden, denn jedes Öffnen bedeutet Vernichtung erzeugter Arbeit.

Es ist auch möglich, dass das Öffnen und Schließen der zumindest einen Ventileinrichtung mit einer einstellbaren Zeitverzögerung nach Aktivierung des Einblasevorgangs erfolgt. Weiterhin kann das Öffnen und Schließen abgestuft oder stufenlos erfolgen.

In einer anderen Ausführung kann die zumindest eine Ventileinrichtung als Drehschieberventil mit einem Drehkörperelement ausgebildet sein. Die zumindest eine als Drehschieberventil ausgebildete Ventileinrichtung kann in der Frischluftzuführeinrichtung integriert sein, wobei das Drehkörperelement ein Klappenelement der Frischluftzuführeinrichtung bildet. So wird ein besonders kompakte und teilesparende Bauweise erzielt.

Der Drehkörper kann innen liegend in einem Ventilgehäuse oder auch außen liegend ausgeführt sein.

Alternativ kann die zumindest eine Ventileinrichtung mit einem Längsschieber ausgebildet sein. Auch hier kann dieser innerhalb oder außerhalb eines Ventilgehäuses der Ventileinrichtung angeordnet sein.

In einer weiteren alternativen Ausführung kann die zumindest eine Ventileinrichtung mit zumindest einer Ventilklappe ausgebildet sein. Die Ventilklappe kann mechanisch über Hebelgetriebe mit dem Klappenelement der Frischluftzuführeinrichtung gekoppelt sein. Hierbei ist es vorteilhaft, wenn die zumindest eine Ventileinrichtung in die Frischluftzuführeinrichtung integriert ist.

Drehschieber und Längsschieber ermöglichen der zumindest einen Ventileinrichtung, dass diese sowohl abgestuft als auch stufenlos den Verdichterauslass mit der Atmosphäre oder dem Verdichtereinlass verbinden. Es ist dadurch weiterhin möglich, einen Querschnitt eines Ventilauslasses bzw. einen Kanalquerschnitt einer Ventilauslassleitung so zu variieren, dass der abgeführte Massenstrom auf das minimal notwendige Maß beschränkt wird, damit der Arbeitspunkt des Verdichters im stabilen Bereich liegt und die Lagerbelastung minimiert wird. Somit kann eine bedarfsgerechte Steuerung bzw. Regelung erzielt werden.

In weiterer Ausgestaltung kann die zumindest eine Ventileinrichtung zumindest einen Drucksensor zur Erfassung des Verdichterdrucks aufweisen. Dadurch ist sie unabhängig von vorhandenen oder auch nicht vorhandenen Drucksensoren und somit leichter nachrüstbar.

Die zumindest eine steuerbare Ventileinrichtung kann in der Frischluftzuführeinrichtung, in der Verbindung zwischen der Frischluftzuführeinrichtung und dem Verdichter oder in der Ladeeinrichtung stromabwärts hinter dem Verdichter angeordnet sein. Durch diese mehrfachen Einbaumöglichkeiten ergibt sich eine flexible Anpassung an unterschiedliche Brennkraftmaschinenanordnungen.

Die zumindest eine steuerbare Ventileinrichtung wird aktiviert, wenn der Verdichterdruck einen vorgebbaren ersten Druckwert überschreitet, und desaktiviert, wenn der Verdichterdruck einen vorgebbaren zweiten Druckwert unterschreitet. Diese Druckwerte können an der jeweiligen zugehörigen Steuereinrichtung vorher eingestellt werden, zum Beispiel durch ein Programmiergerät.

Das Verfahren ist auch für Brennkraftmaschinen geeignet, die keine Frischluftzuführung aufweisen. Ist eine Frischluftzuführeinrichtung vorhanden, kann deren Aktivierung zum Start der Aktivierung der Vorrichtungsanordnung verwendet werden.

Die Erfindung wird nun anhand einer beispielhaften Ausführung mit Bezug auf die beigefügten Zeichnungen näher erläutert. Hierbei zeigen:
- Figur 1: eine schematische Blockdarstellung einer Ansaugseite einer aufgeladenen Brennkraftmaschine mit einem ersten Ausführungsbeispiel einer erfin- dungsgemäßen Vorrichtungsanordnung;
- Figur 2: eine Variation nach Fig. 1;
- Figur 3: eine schematische Blockdarstellung einer Ansaugseite einer aufgeladenen Brennkraftmaschine mit einem zweiten Ausführungsbeispiel der erfin- dungsgemäßen Vorrichtungsanordnung;
- Figur 4: eine Variation nach Fig. 2;
- Figur 5: eine weitere Variation nach Fig. 1;
- Figur 6: eine weitere Variation nach Fig. 3;
- Figur 7a: eine schematische Schnittdarstellung einer ersten beispielhaften Ventilein- richtung in einer Grundstellung;
- Figur 7b: die Ventileinrichtung nach Fig. 7a in einer Abluftstellung;
- Figur 8a: eine schematische Schnittdarstellung einer zweiten beispielhaften Ventil- einrichtung in einer Grundstellung;
- Figur 8b: die Ventileinrichtung nach Fig. 8a in einer teilgeöffneten Abluftstellung;
- Figur 9a: eine schematische Schnittdarstellung einer dritten beispielhaften Ventil- einrichtung in einer Grundstellung;
- Figur 9b: die Ventileinrichtung nach Fig. 9a in einer teilgeöffneten Abluftstellung;
- Figur 10: eine schematische Schnittdarstellung einer vierten beispielhaften Ventil- einrichtung in einer teilgeöffneten Abluftstellung; und
- Figur 11: eine schematische Schnittdarstellung einer fünften beispielhaften Ventil- einrichtung in einer teilgeöffneten Abluftstellung.

Elemente und Funktionseinheiten mit gleichen oder ähnlichen Funktionen sind in den Figuren mit gleichen Bezugszeichen versehen.

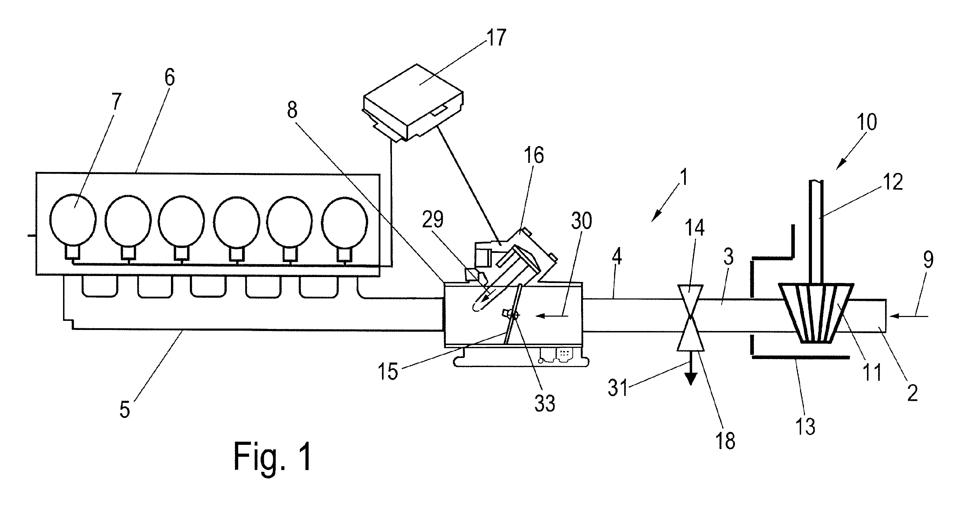

Figur 1 ist eine schematische Blockdarstellung einer Luftzufuhrseite einer aufgeladenen Brennkraftmaschine 6 mit einem ersten Ausführungsbeispiel einer erfindungsgemäßen Vorrichtungsanordnung 1.

Die Brennkraftmaschine 6 ist in diesem Beispiel ein Dieselmotor mit sechs Zylindern 7 und weist eine Einspritzeinrichtung auf, welche nur angedeutet ist und mit einem Steuergerät 17, zum Beispiel ein Motorsteuergerät (auch als EDC bezeichnet), in Verbindung steht. Weiterhin ist der Brennkraftmaschine eine Ansaugleitung 5 zugeordnet, welche mit verdichteter Einlassluft 9 und in bestimmten Betriebszuständen mit zusätzlicher Frischluft durch eine Frischluftzuführeinrichtung 8 beaufschlagt wird. Die Einlassluft 9 wird in diesem Beispiel durch einen Verdichter 11 einer Ladeeinrichtung 10, z.B. Abgasturbolader, verdichtet. Zur Steuerung des Verdichterdrucks des Verdichters 11 ist eine Vorrichtungsanordnung 1 angeordnet, welche zumindest eine steuerbare Ventileinrichtung 14 aufweist.

Die Ansaugleitung 5 ist stromaufwärts mit der Frischluftzuführeinrichtung 8 verbunden, welche ihrerseits über eine Verbindungsleitung 4 mit der Ventileinrichtung 14 gekoppelt ist. Die Frischluftzuführeinrichtung 8 ist außerdem in nicht dargestellter Weise mit einer Frischluftquelle verbunden, zum Beispiel einem Druckluftbehälter, und kann zum Beispiel als Bestandteil einer Einrichtung zur Frischluftversorgung ausgebildet sein, wie sie in der WO 2006/089779 A1 beschrieben ist.

Die Ventileinrichtung 14 ist stromaufwärts über eine Verdichterauslassleitung 3 mit einem Auslass des Verdichters 11 der Ladeeinrichtung 10 verbunden. Der Verdichter 11 kommuniziert mit der Atmosphäre über eine Lufteinlassleitung 2, welche die Einlassluft 9 in einen Einlass des Verdichters 11 führt. Der Verdichter 11 ist hier über eine Antriebswelle 12 im Falle eines Abgasturboladers mit einer Abgasturbine (nicht gezeigt) gekoppelt, die vom Abgas der Brennkraftmaschine 6 angetrieben wird, und in einem Gehäuse 13 angeordnet. Die Abgasanlage der Brennkraftmaschine 6 ist nicht dargestellt, aber leicht vorstellbar.

Die Frischluftzuführeinrichtung 8 weist weiterhin ein Klappenelement 15 auf, welches um eine Klappenelementachse 33 senkrecht zu einer Strömungsrichtung eines Verdichtungsluftstroms 30, der in Längsrichtung der Frischluftzuführeinrichtung 8 verläuft, verschwenkbar ist. Das Klappenelement 15 ist mit einer Antriebseinheit 16 gekoppelt, die mit dem Steuergerät 17 in Verbindung steht. Die Antriebseinheit 16 kann weiterhin Drucksensoren aufweisen, welche in Strömungsrichtung vor und hinter dem Klappenelement 15 in der Frischluftzuführeinrichtung 8 angeordnet sind (nicht dargestellt), wie z.B. in der WO 2006/089779 A1 beschrieben ist.

Durch den Verdichter 11 wird die Einlassluft 9 verdichtet und über die Verdichterauslassleitung 3 und Verbindungsleitung 4 in dem Verdichtungsluftstrom 30 in die Frischluftzuführeinrichtung 8 geleitet. Dabei steht das Klappenelement 15 in einer (nicht gezeigten) waagerechten Stellung, so dass der Verdichtungsluftstrom 30 in die Ansaugleitung 5 geführt wird. Im Falle einer Drehmomentanforderung durch einen Fahrer an die Brennkraftmaschine 6 wird in der Ansaugleitung 5 eine erhöhte Luftmenge benötigt, welche aufgrund des so genannten Turbolochs der Ladeeinrichtung 10 von dieser anfänglich nicht geliefert werden kann. Um den erhöhten Luftbedarf in diesem Betriebszustand zu decken, wird das Klappenelement 15 durch die Antriebseinheit 16 (in diesem Beispiel gesteuert durch das Steuergerät 17) in die in Figur 1 gezeigte Verschlussstellung geschwenkt und gleichzeitig ein Frischluftventil in der Frischluftzuführeinrichtung 8 geöffnet, wodurch ein Frischluftstrom 29 aus der Frischluftquelle in die Ansaugleitung 5 eingeblasen wird. Das Klappenelement 15 verschließt in diesem Betriebszustand, welcher auch als Frischluftzufuhr oder Einblasvorgang bezeichnet wird, die Verbindungsleitung 4 derart, dass der Frischluftstrom 29 nicht in den Verdichter 11 gelangen kann. Dabei wird der dann durch den Verdichter 11 sich vergrößernde Verdichtungsluftstrom 30 durch die Verschlussstellung des Klappenelementes 15 gestaut, wodurch sich der Verdichterdruck erhöht. Zur Vermeidung eines dabei auftretenden so genannten Pumpens der Ladeeinrichtung 10 im Betriebszustand der Einblasung des Frischluftstroms 29 und zur Einstellung eines definierten und zeitlich stationären Drucks am Verdichterlaufrad des Verdichters 11 wird die steuerbare Ventileinrichtung 14 der Vorrichtungsanordnungl so gesteuert, dass sie während der Aktivierung der Frischluftzuführeinrichtung 8 einen vorher festlegbaren Massenstrom in Form eines Abluftstroms 31 aus der Verdichterauslassleitung 3 über einen Ventilauslass 18 abführt. Dies wird weiter unten noch näher erläutert. Auf diese Weise wird der Verdichterdruck gesteuert, so dass eine Lagerbelastung des Verdichters 11 in den transienten Phasen der Einblasung des Frischluftstroms 29 minimiert wird.

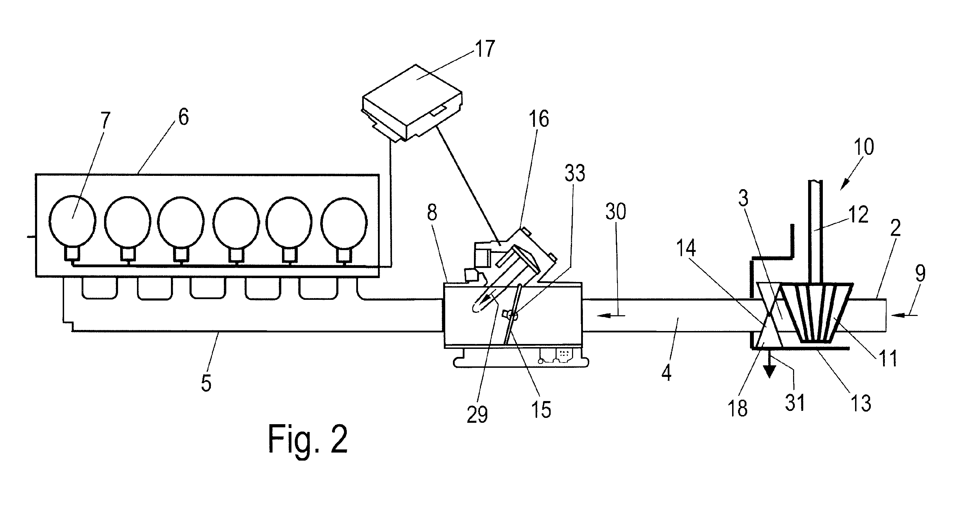

Die Ventileinrichtung 14 kann wie in Figur 1 gezeigt zwischen der Verdichterauslassleitung 3 und der Verbindungsleitung 4 zur Frischluftzuführeinrichtung 8 separat angeordnet sein. Eine Variation des ersten Ausführungsbeispiels nach Figur 1 ist in Figur 2 dargestellt, wobei die Ventileinrichtung 14 im Gehäuse 13 der Ladeeinrichtung 10 stromabwärts vom Verdichter 11 integriert ist.

In dem ersten Ausführungsbeispiel nach Figur 1 und 2 wird der Abfuhrluftstrom 31 ins Freie abgeführt. Die Ventileinrichtung 14 ist hier nur schematisch dargestellt und kann zum Beispiel ein mechanisches Ventil sein, welches bei Überschreiten eines vorher festgelegten Drucks in der Verdichterauslassleitung 3 öffnet und somit das Druckverhältnis begrenzt bzw. den abführbaren Massenluftstrom als Abfuhrluftstrom 31 erhöht.

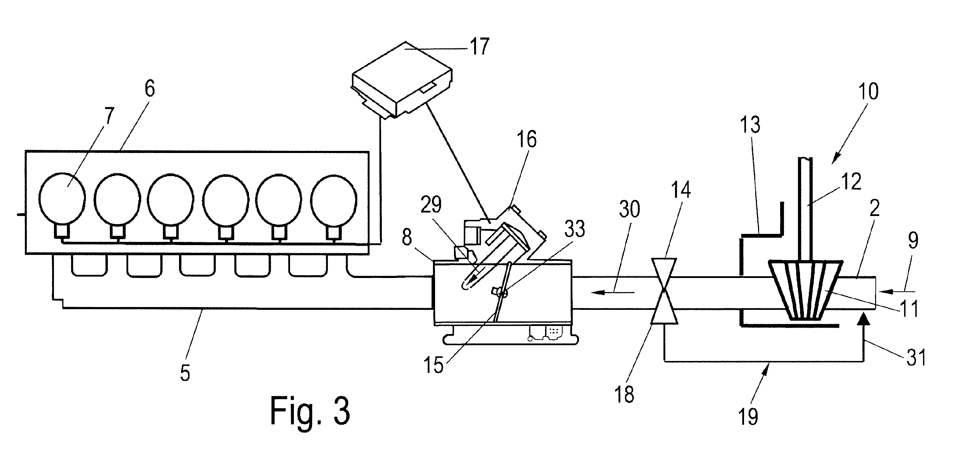

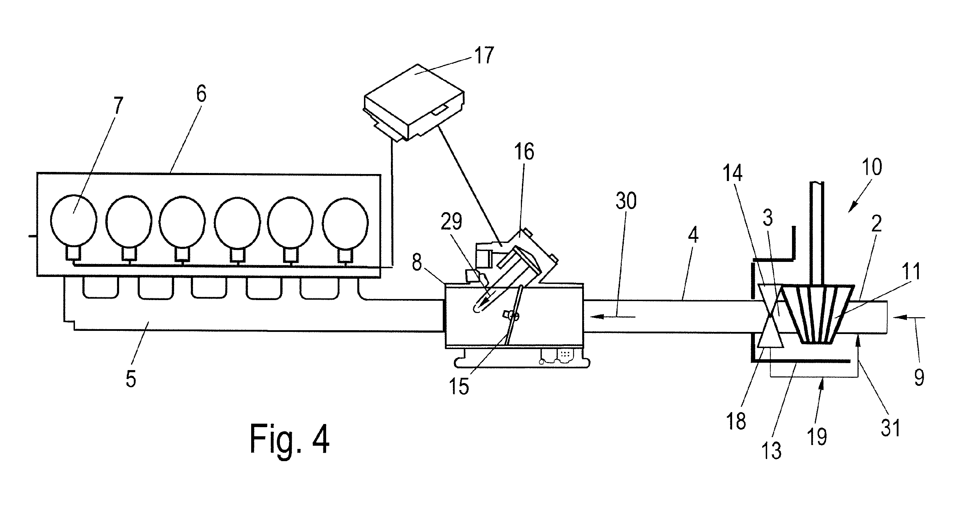

In einem zweiten Ausführungsbeispiel, welches in Figur 3 und in einer Variation in Figur 4 illustriert ist, wird der Abfuhrluftstrom 31 über eine Ventilauslassleitung 19 dem Verdichter 11 wieder zugeführt, z.B. über die Lufteinlassleitung 2 oder eine zusätzliche Zuführung (nicht gezeigt).

In Figur 2 ist die Ventilauslassleitung 19 schematisch gezeigt, wobei sie sowohl als separate Leitung als auch in Form von in dem Gehäuse 13 der Ladeeinrichtung 10 integrierten Kanälen ausgestaltet sein kann.

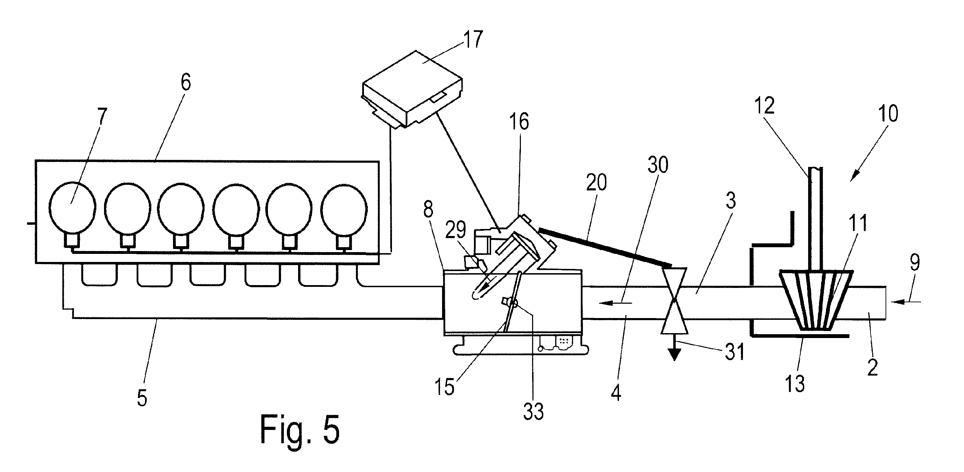

Die Ventileinrichtung 14 kann wie in Figur 5 in einer Variation von Figur 1 gezeigt mittels eines mechanischen Ventilantriebs 20 gesteuert werden. Dabei wird der Ventilantrieb 20, z.B. eine Stange und/oder ein Hebelgetriebe, von der Antriebseinheit 16 der Frischluftzuführeinrichtung 8 so betätigt, dass die Ventileinrichtung 14 öffnet, wenn das Klappenelement 15 geschlossen wird. Dieser Ventilantrieb 20 kann z.B. mit dem Klappenelement 15 gekoppelt sein oder einen eigenen Antrieb aufweisen, der sich an der Frischluftzuführeinrichtung 8 befindet. Andere Konstellationen sind selbstverständlich möglich.

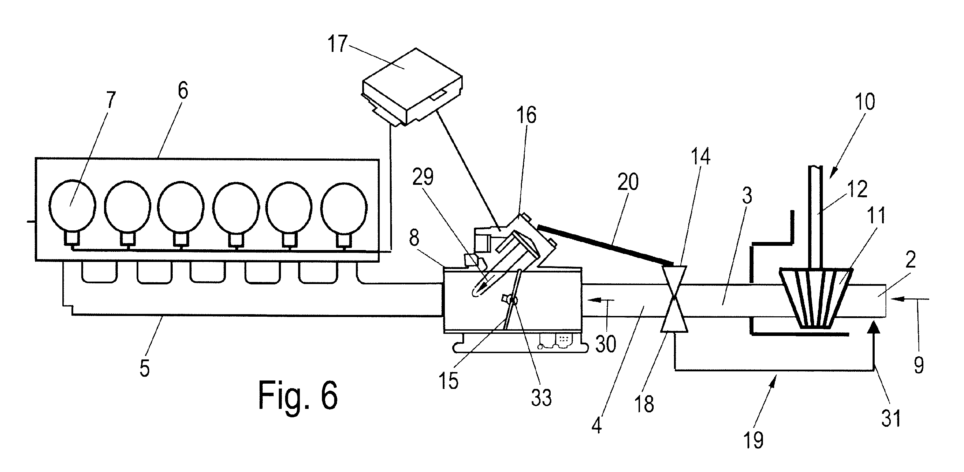

Figur 6 zeigt eine Variation der Figur 3, wobei die Ventileinrichtung 14 durch den Ventilantrieb 20 steuerbar ist und mit der Ventilauslassleitung 19 zur Rückführung des Abfuhrluftstroms 31 zum Einlass des Verdichters 11 versehen ist. Selbstverständlich ist es möglich, dass die Ventileinrichtung 14 an beliebiger Stelle zwischen dem Verdichter 11 und der Frischluftzuführeinrichtung 8 angeordnet und mit einem entsprechenden mechanischen Ventilantrieb 20 versehen werden kann.

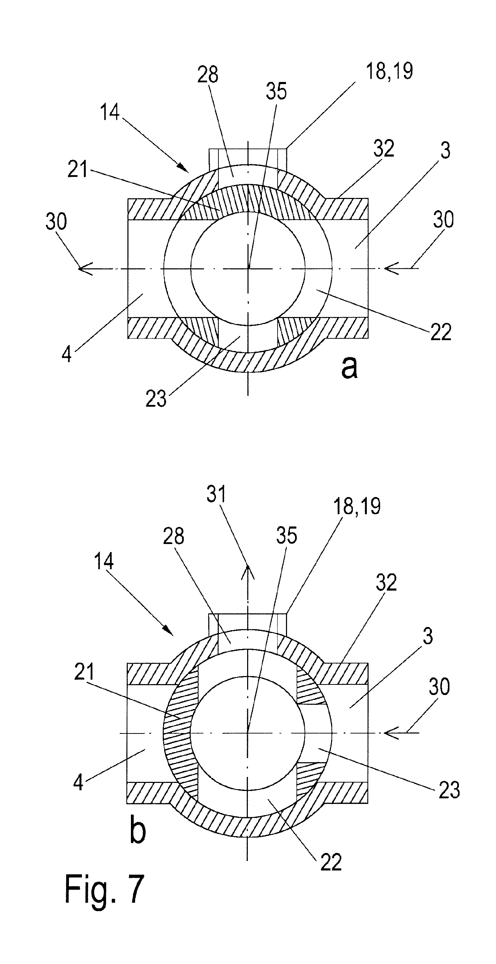

Die Figuren 1 bis 6 zeigen die Ventileinrichtung 14 nur in schematischer Darstellung. Ein detailliertes erstes Ausführungsbeispiel einer Ventileinrichtung 14 zeigen Figur 7a und in schematischen Schnittdarstellungen, wobei Figur 7a eine Grundstellung und Figur 7b eine Abluftstellung zeigt.

Diese Ventileinrichtung 14 ist in Gestalt eines mechanischen Drehschieberventils ausgebildet, wobei ein Drehkörperelement 21 in einem Ventilgehäuse 32 drehbar um eine Ventildrehachse 35 angeordnet ist. Die Ventildrehachse 35 steht senkrecht auf der Zeichnungsebene und senkrecht zum Verdichtungsluftstrom 30. Das Ventilgehäuse 32 bildet mit seinem rechten Endabschnitt (der nur schematisch dargestellt ist) die Verdichterauslassleitung 3 und mit seinem linken Endabschnitt die Verbindungsleitung 4. Zwischen diesen ist das Ventilgehäuse 32 kreisabschnittsförmig ausgebildet und hier an der Oberseite dieses Mittelabschnitts mit einem Stutzen versehen, welcher um eine Ventilauslassöffnung 28 herum angeordnet ist und den Ventilauslass 18 bzw. einen Abschnitt der Ventilauslassleitung 19 bildet. Dieser Mittelabschnitt kontaktiert das Drehkörperelement 21 teilweise formschlüssig. Das Drehkörperelement 21 weist einen Durchgang 22 auf, welcher in der in Figur 7a gezeigten Grundstellung die Verdichterauslassleitung 3 mit der Verbindungsleitung 4 verbindet. Senkrecht zu dem Durchgang 22 ist ein Abzweig 23 in der Art eines T-Abzweigs angeordnet, welcher mit dem Durchgang 22 kommuniziert und in der Grundstellung von der unteren Wand des Mittelabschnitts des Ventilgehäuses 32 abgedichtet ist.

In Figur 7b ist das Drehkörperelement 21 um 90° so um die Ventildrehachse 35 verschwenkt, dass der T-Abzweig 23 mit der Verdichterauslassleitung 3 kommuniziert. Der Durchgang 22 ist an der unteren Seite verschlossen und kommuniziert in dieser Abluftstellung mit der Ventilauslassöffnung 28 derart, dass die letztere mit der Verdichterauslassleitung 3 in Kommunikation steht, wodurch der Verdichtungsluftstrom 30 in den Abfuhrluftstrom 31 abgezweigt wird. Selbstverständlich kann das Drehkörperelement 21 auch Zwischenstellungen zwischen der Grundstellung und der Abluftstellung einnehmen, wodurch der Abfuhrluftstrom 31 durch Einstellung eines Kanalquerschnitts der Ventilauslassöffnung 28 entsprechend einstellbar ist.

Es ist auch möglich, dass die Ventileinrichtung 14 gemäß dem ersten Ausführungsbeispiel nach Figur 7a und 7b in der Frischluftzuführeinrichtung 8 integriert ist und gleichzeitig die Funktion des Klappenelementes 15 aufweist.

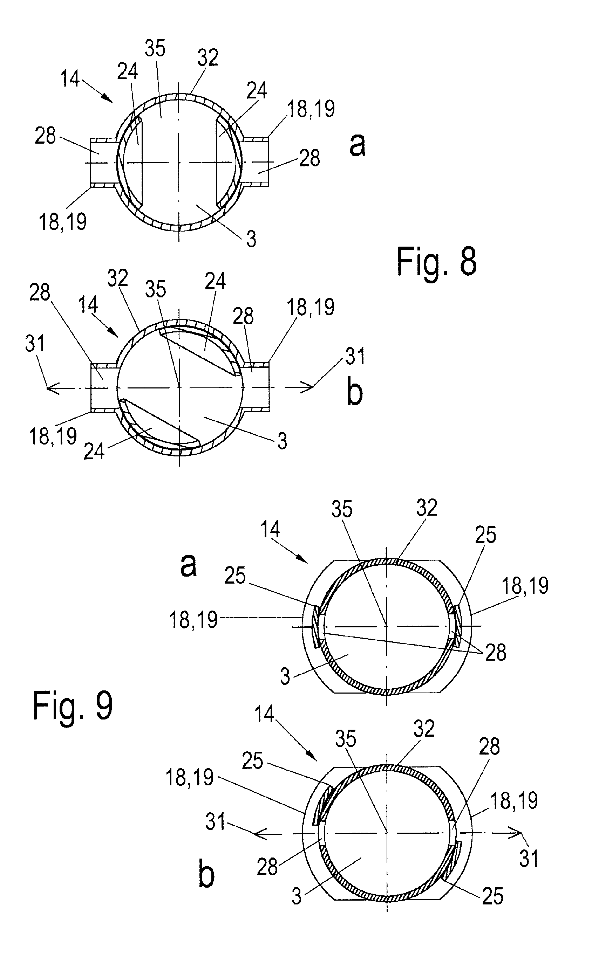

Figuren 8a und 8b zeigen schematische Schnittdarstellungen einer zweiten beispielhaften Ventileinrichtung 14 in einer Grundstellung und in einer teilgeöffneten Abluftstellung.

Das Ventilgehäuse 32 ist in diesem Beispiel zylinderförmig, wobei seine Längsachse senkrecht zur Zeichnungsebene steht und der Querschnitt der Verdichterauslassleitung 3 so einsehbar ist, dass eine Blickrichtung zum Verdichter 11, d.h. stromaufwärts vorliegt. Das Ventilgehäuse 32 weist hier zwei gegenüberliegende Ventilauslassöffnungen 28 auf, die wie im ersten Beispiel nach Figur 7a, 7b jeweils einen Ventilauslass 18 bzw. einen Abschnitt einer Ventilauslassleitung 19 bilden. Ein Innendrehschieber 24 ist innerhalb des zylinderförmigen Ventilgehäuses 32 so angeordnet, dass seine Ventildrehachse 35 mit der Längsachse des Ventilgehäuses 32 fluchtet und seine teilzylindrische Außenwand vom Ventilgehäuse 32 formschlüssig umgeben ist. Der Innendrehschieber 24 ist in seiner Längsrichtung durchgängig, wobei er senkrecht dazu eine Passage aufweist, die in der Abluftstellung (Figur 8b) die in diesem Beispiel gezeigten zwei Ventilauslassöffnungen 28 mit der Verdichterauslassleitung 3 in Kommunikation setzt, um jeweils einen Abfuhrluftstrom 31 durch beide Ventilauslassöffnungen 28 zu ermöglichen. Figur 7b zeigt eine Zwischenstellung, d.h. eine teilgeöffnete Abluftstellung, wobei der Kanalquerschnitt der Ventilauslassöffnungen 28 jeweils etwa drei Viertel geöffnet ist.

Eine dritte beispielhafte Ventileinrichtung 14 ist in schematischen Schnittdarstellungen in einer Grundstellung in Figur 9a und in einer teilgeöffneten Abluftstellung in Figur 9b illustriert.

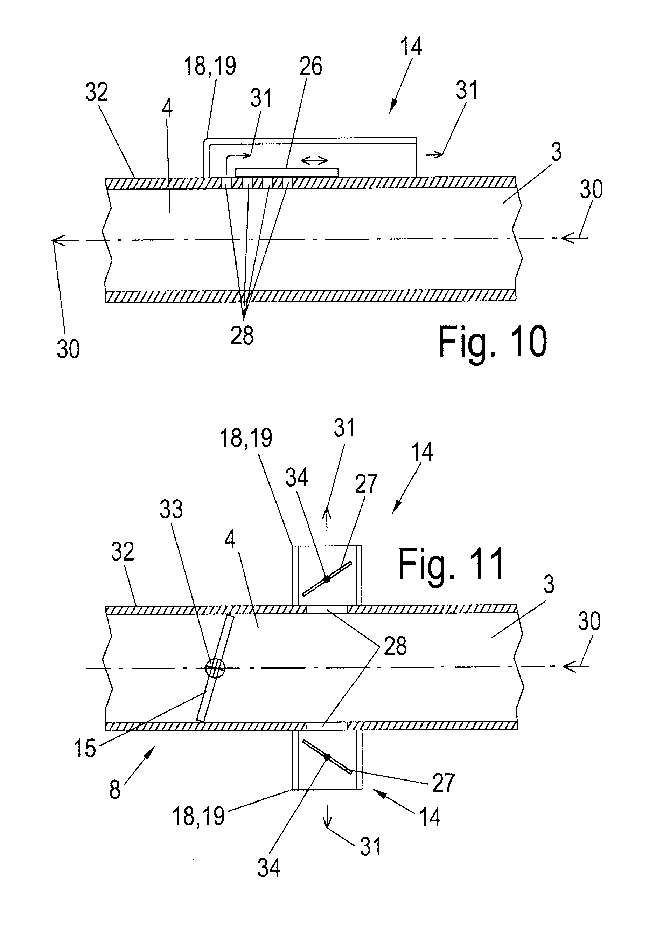

Hierbei ist ein Außendrehschieber 25 auf einer zylindrischen Außenfläche eines Ventilgehäuses 32 um eine mit der Längsachse des Ventilgehäuses 32 fluchtende Ventildrehachse 35 verschwenkbar angeordnet. In der Wand des Ventilgehäuses 32 sind gegenüberliegende Ventilauslassöffnungen 28 eingebracht, welche in der in Figur 1 gezeigten Grundstellung der Ventileinrichtung 14 von jeweils einem Abschnitt des Außendrehschiebers 25 verschlossen sind. Um den Bereich eines Außendrehschiebers 25 ist auf beiden Seiten des Ventilgehäuses 32 jeweils ein Ventilauslass 18 bzw. Ventilauslassleitung 19 in Form eines Kanals (siehe z.B. Figur 10), der sich senkrecht zur Zeichnungsebene erstreckt, angeordnet. Figur 9b zeigt den Außendrehschieber 25 ähnlich zu Figur 8b in einer teilgeöffneten Abluftstellung, in welcher die Ventilauslassöffnungen 28 jeweils etwa drei Viertel geöffnet sind. Andere Zwischenstellungen sind selbstverständlich möglich.

Die drehbare bzw. schwenkbare Lagerung und Gestaltung von Innendrehschieber 24 und Außendrehschieber 25 wird nicht weiter erläutert, da sie für einen Fachmann leicht vorstellbar ist.

Figur 10 zeigt eine schematische Schnittdarstellung einer vierten beispielhaften Ventileinrichtung 14 in einer teilgeöffneten Abluftstellung.

Ein Ventilgehäuse 32 ist wie schon in Figur 7a, b gezeigt mit der Verdichterauslassleitung 3 und der Verbindungsleitung 4 verbunden bzw. bildet Abschnitte dieser Leitungen. Das Ventilgehäuse 32 der Ventileinrichtung 14 ist mit mehreren, in Längsrichtung des Ventilgehäuses 32 hintereinander angeordneten Ventilauslassöffnungen 28 versehen, welche von einem Längsschieber 26 verschließbar bzw. zu öffnen sind. Dabei ist der Längsschieber 26 in Längsrichtung (Doppelpfeil) verschiebbar angeordnet. Im gezeigten Beispiel ist eine von vier Ventilauslassöffnungen 28 so geöffnet, dass diese einen Abfuhrluftstrom 31 von dem Verdichtungsluftstrom 30 im Ventilgehäuse 32 aus der Verdichterauslassleitung 3 in den Ventilauslass 18 bzw. die Ventilauslassleitung 19 ermöglicht. Der Längsschieber 26 ist so ausgebildet, dass er an der Außenfläche des Ventilgehäuses 32 im Bereich der zu verschließenden bzw. zu öffnenden Ventilauslassöffnungen 28 formschlüssig anliegt. Die Ventilauslassleitung 19 überdeckt den Längsschieber 26 in seinem Verstellbereich und mündet ins Freie oder in die Lufteinlassleitung 2 (siehe z.B. Figur 3).

Schließlich zeigt Figur 11 eine schematische Schnittdarstellung einer fünften beispielhaften Ventileinrichtung 14 in einer teilgeöffneten Abluftstellung, welche hier in die Frischluftzuführeinrichtung 8 integriert ist, dergestalt, dass das Ventilgehäuse 32 sowohl die Ventileinrichtung 14 als auch das Klappenelement 15 aufnimmt. Das Ventilgehäuse 32 weist stromaufwärts von dem Klappenelement 15 zwei gegenüberliegende Ventilauslassöffnungen 28 auf, welche jeweils als Ventilauslass 18 und/oder Ventilauslassleitung 19 entsprechend ausgebildet sind (nur schematisch angedeutet). In einem jeweiligen Ventilauslass 18 außerhalb einer Ventilauslassöffnung 28 ist jeweils eine um eine Ventilklappenachse 34 verschwenkbare Ventilklappe 27 angeordnet, durch welche ein jeweiliger Kanalquerschnitt des zugehörigen Ventilauslasses 18 einstellbar ist. Das Klappenelement 15 ist hier im Betriebszustand der Frischluftzufuhr geschlossen und die Ventilklappen 27 sind teilgeöffnet, wodurch der Verdichtungsluftstrom 30 durch zwei Abfuhrluftströme 31 abgezweigt wird. Die Ventilklappen 27 können zum Beispiel zusammen mit dem Klappenelement 15 von der Antriebseinheit 16 betätigt werden. Andere Betätigungen, wie zum Beispiel durch Einzelmotorantriebe, sind natürlich möglich.

Die Ventileinrichtungen 14, welche in den Figuren gezeigt sind, können einerseits mechanisch betätigt werden. Andererseits können sie selbstverständlich pneumatische oder elektrische (elektromagnetische, elektromotorische) Antriebe aufweisen.

Die Betätigung der steuerbaren Ventileinrichtung 14 kann wie oben erwähnt mittels einer Einrichtung erfolgen, welche das Ventil in dem Betriebszustand der Frischlufteinblasung bei einem vorher einstellbaren Verdichterdruck öffnet und danach wieder schließt. Die Betätigung kann aber auch zum Beispiel dergestalt ausgebildet sein, dass ein Ventilantrieb, zum Beispiel ein Schrittmotor, von dem Steuergerät 17 angesteuert wird. Die steuerbare Ventileinrichtung 14 der Vorrichtungsanordnung 1 kann auch mit einer dezentralen Steuereinrichtung (nicht gezeigt) versehen und/oder verbunden sein, welche mit dem Steuergerät 17 und/oder der Frischluftzuführeinrichtung 8 kommuniziert. Die Vorrichtungsanordnung 1 kann auch Drucksensoren aufweisen, welche in der Ventileinrichtung 14 und/oder in der Verdichterauslassleitung 3 angeordnet sind. Sie kann auch mit Drucksensoren der Frischluftzuführeinrichtung 8 und/oder der Ladeeinrichtung 10 kommunizieren.

Es ist auch möglich, dass ein Verdichterkennlinienfeld der Ladeeinrichtung 10 in dem Steuergerät 17, einer Steuereinrichtung an bzw. in der Ventileinrichtung 14 oder an anderer Stelle in einer Speichereinrichtung hinterlegt ist, mit Hilfe dessen das Steuergerät 17 oder die Steuereinrichtung der Vorrichtungsanordnung 1 die Ventileinrichtung 14 nur bei Erreichen einer so genannten Pumpgrenze der Ladeeinrichtung 10 aktiviert, wodurch sich eine bedarfsgerechte Steuerung bzw. Regelung des Verdichterdrucks des Verdichters 11 der Ladeeinrichtung 10 ergibt.

Die Erfindung ist nicht auf die oben beschriebenen Ausführungsbeispiele beschränkt. Sie ist im Rahmen der beigefügten Ansprüche modifizierbar.

So können zum Beispiel die Ventilklappen 27 gemäß Figur 11 durch elektromagnetische Ventile und/oder elektrische Stellventile ersetzt werden.

Auch der Einsatz einer mechanischen Klappe in der Frischluftzuführeinrichtung 8 mit einer Drehachse parallel zum Verdichtungsluftstrom 30 außerhalb des Gaskanals und senkrecht dazu aufgehängter Platten ist möglich, wobei diese Platten im geöffneten Zustand der Kontur des Ansaugkanals folgen und alle anderen Strömungskanäle bzw. Ventilauslassöffnungen 28 verschließen, im geschlossenen Zustand einen durch die Drehstellung einstellbaren Kanalquerschnitt von der Verdichterauslassleitung 3 zur Umgebung oder zur Ventilauslassleitung 19 öffnen.

Die Ventileinrichtung 14 kann mit zumindest einem Drucksensor zur Erfassung des Verdichterdrucks versehen sein.

Eine Betätigung der Ventileinrichtung 14 kann auch verzögert einsetzen und/oder verzögert beendet werden, wobei die Verzögerung einstellbar sein kann.

Das Verbinden bzw. in Kommunikation setzen und wieder Verschließen von Verdichterauslassleitung 3 mit der Atmosphäre und/oder dem Einlass des Verdichters 11 kann sowohl stufenlos als auch abgestuft erfolgen.

### Bezugszeichen

- 1: Vorrichtungsanordnung
- 2: Lufteinlassleitung
- 3: Verdichterauslassleitung
- 4: Verbindungsleitung
- 5: Ansaugleitung
- 6: Brennkraftmaschine
- 7: Zylinder
- 8: Frischluftzuführeinrichtung
- 9: Einlassluft
- 10: Ladeeinrichtung
- 11: Verdichter
- 12: Antriebswelle
- 13: Gehäuse
- 14: Ventileinrichtung
- 15: Klappenelement
- 16: Antriebseinheit
- 17: Steuergerät
- 18: Ventilauslass
- 19: Ventilauslassleitung
- 20: Ventilantrieb
- 21: Drehkörperelement
- 22: Durchgang
- 23: Abzweig
- 24: Innendrehschieber
- 25: Außendrehschieber
- 26: Längsschieber
- 27: Ventilklappe
- 28: Ventilauslassöffnung
- 29: Frischluftstrom
- 30: Verdichtungsluftstrom
- 31: Abfuhrluftstrom
- 32: Ventilgehäuse
- 33: Klappenelementachse
- 34: Ventilklappenachse
- 35: Ventildrehachse

## Patentansprüche

1. Vorrichtungsanordnung (1) zur Steuerung eines Verdichterdrucks einer aufgeladenen Brennkraftmaschine (6), mit einer Frischluftzuführeinrichtung (8), welche einen Auslass des Verdichters (11) mit der Brennkraftmaschine (6) verbindet, und mit einer Ladeeinrichtung (10),
**gekennzeichnet durch**
zumindest eine steuerbare Ventileinrichtung (14), **durch** welche bei Aktivierung derselben der Auslass des Verdichters (11) mit der Atmosphäre oder/und dem Einlass des Verdichters (11) zur Steuerung des Verdichterdrucks verbindbar ist.

2. Vorrichtungsanordnung (1) nach Anspruch 1, **dadurch gekennzeichnet, dass** die zumindest eine steuerbare Ventileinrichtung (14) eine Betätigungseinrichtung aufweist, welche eine Aktivierung bei Überschreiten eines vorgebbaren Verdichterdrucks und eine Desaktivierung bei Unterschreiten eines vorgebbaren Verdichterdrucks bewirkt.

3. Vorrichtungsanordnung (1) nach Anspruch 2, **dadurch gekennzeichnet, dass** die Betätigungseinrichtung als mechanischer Ventilantrieb (20) als Hebelgetriebe ausgebildet ist, welches zur Zusammenwirkung mit einer Antriebseinheit (16) der Frischluftzuführeinrichtung (8) oder einer separaten Antriebseinheit vorgesehen ist.

4. Vorrichtungsanordnung (1) nach Anspruch 2, **dadurch gekennzeichnet, dass** die zumindest eine Ventileinrichtung (14) eine elektrische Betätigungseinrichtung aufweist.

5. Vorrichtungsanordnung (1) nach Anspruch 4, **dadurch gekennzeichnet, dass** die elektrische Betätigungseinrichtung eine Steuereinrichtung aufweist.

6. Vorrichtungsanordnung (1) nach Anspruch 4, **dadurch gekennzeichnet, dass** die elektrische Betätigungseinrichtung zur Zusammenwirkung mit einem Steuergerät (17) der Brennkraftmaschine (6) und/oder der Frischluftzuführeinrichtung (8) vorgesehen ist.

7. Vorrichtungsanordnung (1) nach Anspruch 5 oder 6, **dadurch gekennzeichnet, dass** die elektrische Betätigungseinrichtung anhand zumindest eines Kennlinienfeldes des Verdichters (11) der Ladeeinrichtung (10) steuerbar ist, wobei das zumindest eine Kennlinienfeld in der Steuereinrichtung oder dem Steuergerät (17) gespeichert ist.

8. Vorrichtungsanordnung (1) nach einem der vorhergehenden Ansprüche, **dadurch gekennzeichnet, dass** die zumindest eine Ventileinrichtung (14) als Drehschieberventil mit einem Drehkörperelement (21) ausgebildet ist.

9. Vorrichtungsanordnung (1) nach Anspruch 8, **dadurch gekennzeichnet, dass** das die zumindest eine als Drehschieberventil ausgebildete Ventileinrichtung (14) in der Frischluftzuführeinrichtung (8) integriert ist, wobei das Drehkörperelement (21) ein Klappenelement (15) der Frischluftzuführeinrichtung (8) bildet.

10. Vorrichtungsanordnung (1) nach einem der Ansprüche 1 bis 7, **dadurch gekennzeichnet, dass** die zumindest eine Ventileinrichtung (14) mit einem Längsschieber (26) ausgebildet ist.

11. Vorrichtungsanordnung (1) nach einem der Ansprüche 1 bis 7, **dadurch gekennzeichnet, dass** die zumindest eine Ventileinrichtung (14) mit zumindest einer Ventilklappe (27) ausgebildet ist.

12. Vorrichtungsanordnung (1) nach einem der vorhergehenden Ansprüche, **dadurch gekennzeichnet, dass** die zumindest eine Ventileinrichtung (14) zumindest einen Drucksensor zur Erfassung des Verdichterdrucks aufweist.

13. Vorrichtungsanordnung (1) nach einem der vorhergehenden Ansprüche, **dadurch gekennzeichnet, dass** die zumindest eine steuerbare Ventileinrichtung (14) in der Frischluftzuführeinrichtung (8), in der Verbindung zwischen der Frischluftzuführeinrichtung (8) und dem Verdichter (11) oder in der Ladeeinrichtung (10) stromabwärts hinter dem Verdichter (11) angeordnet ist.

14. Verfahren zum Steuern eines Verdichterdrucks einer aufgeladenen Brennkraftmaschine (6), mit einer Frischluftzuführeinrichtung (8), welche einen Auslass des Verdichters (11) mit der Brennkraftmaschine (6) verbindet, und einer Ladeeinrichtung (10),
**gekennzeichnet dadurch, dass** zumindest eine steuerbare Ventileinrichtung (14) bei Aktivierung den Auslass des Verdichters (11) mit der Atmosphäre oder/und dem Einlass des Verdichters (11) zur Steuerung des Verdichterdrucks verbindet.

15. Verfahren nach Anspruch 14, **dadurch gekennzeichnet, dass** die zumindest eine steuerbare Ventileinrichtung (14) aktiviert wird, wenn der Verdichterdruck einen vorgebbaren ersten Druckwert überschreitet, und desaktiviert wird, wenn der Verdichterdruck einen vorgebbaren zweiten Druckwert unterschreitet.

16. Verfahren nach Anspruch 14, **dadurch gekennzeichnet, dass** die zumindest eine steuerbare Ventileinrichtung (14) aktiviert wird, wenn nach einer Aktivierung der Frischluftzuführeinrichtung (8) der Verdichterdruck einen vorgebbaren ersten Druckwert überschreitet, und desaktiviert wird, wenn der Verdichterdruck einen vorgebbaren zweiten Druckwert unterschreitet.

17. Verfahren nach Anspruch 14, **dadurch gekennzeichnet, dass** die zumindest eine steuerbare Ventileinrichtung (14) anhand eines Verdichterkennlinienfeldes aktiviert und desaktiviert wird.

18. Verfahren nach Anspruch 14, **dadurch gekennzeichnet, dass** die zumindest eine steuerbare Ventileinrichtung (14) anhand eines Verdichterkennlinienfeldes aktiviert und desaktiviert wird, wenn die Frischluftzuführeinrichtung (8) aktiviert wird.
